# EUROPÄISCHE PATENTSCHRIFT

(11) **EP 2 465 663 B1**
(45) Veröffentlichungstag und Bekanntmachung des Hinweises auf die Patenterteilung: **09.08.2017**
(21) Anmeldenummer: 11190355.5
(22) Anmeldetag: 23.11.2011
(51) Int. Cl.: B29C 49/42, B29C 33/30, B29C 49/78, B23Q 17/00, B29C 49/48, B29C 49/58, B29C 49/68

(54) **Schnellwechselsystem und Betriebsverfahren einer Behälter-Behandlungsmaschine**
Quick swap system and operating method of a container treatment machine
Système de changement rapide et procédé de fonctionnement d'une machine de traitement de récipient

(30) Priorität: 16.12.2010 DE 102010063243
(43) Veröffentlichungstag der Anmeldung: 20.06.2012
(73) Patentinhaber: Krones AG, 93073 Neutraubling (DE)
(72) Erfinder: Blochmann, Erik, 93073 Neutraubling (DE); Sternkopf, Bernhard, 93133 Burglengenfeld (DE)
(74) Vertreter: Grünecker Patent- und Rechtsanwälte PartG mbB

(56) Entgegenhaltungen:
- EP-A1- 1 193 178
- EP-A1- 2 030 759

## Beschreibung

Die Erfindung betrifft ein Schnellwechselsystem gemäß Oberbegriff des Patentanspruchs 1 sowie ein Betriebsverfahren einer Behälter-Behandlungsmaschine gemäß Oberbegriff des Patentanspruchs 12.

Im Betriebsablauf ein Produkt behandelnde oder bearbeitende Maschinen weisen oftmals Maschinenelemente auf, die bei einem Produktwechsel produktabhängig gewechselt werden müssen. Hierzu sind z. B. in Behälter-Behandlungsmaschinen Wechselsysteme bekannt, bei denen ein Bediener oder eine Servoeinrichtung das Maschinenelement und Schrauben, Drehgriffe, oder ähnliche Befestigungselemente so bedient, dass das Maschinenelement nach dem Wechsel an der Sollposition eindeutig kontrolliert festgelegt ist. Dies ist jedoch zeitaufwendig und für Bediener mühsam, insbesondere in Maschinen, die eine Vielzahl zu wechselnder Maschinenelemente enthalten. Um die Wechselzeiten zu minimieren, sind deshalb Schnellwechselsysteme bekannt geworden, bei denen das Maschinenelement in der Sollposition z.B. über einen Kraftspeicher durch Federkraft festgelegt wird, d.h., dass das Schnellwechselsystem die Sollposition selbsttätig einstellt.

Solche Schnellwechselsysteme sind in unterschiedlichsten Maschinen Standard geworden, und, ohne Einschränkung, insbesondere in Behälter-Behandlungsmaschinen, wie beispielsweise Behälter-Blasformmaschinen, und dort speziell zur Festlegung wechselbarer Garniturteile, Formschalen, Formböden, und dergleichen, wobei in diesen nur beispielhaft angeführten Fällen die Sollposition verrastet, gekuppelt, verriegelt oder auf ähnliche Weise eingestellt wird, beispielsweise unterstützt durch Federn.

Bei dem aus EP 2 030 759 A, das ein Schnellwechselsystem gemäß dem Oberbegriff des Anspruchs 1, bzw. ein Betriebsverfahren gemäß dem Oberbegriff des Anspruchs 12 zeigt, bekannten Schnellwechselsystem wird beispielsweise eine Abschirmplatte als Garniturteil an einem Halter einer Preformprodukt-Förderkette in einem Heizmodul mit einem Steckfuß in einer Bohrung des Halters an der Sollposition festgelegt, indem ein stiftförmiges Sicherungselement durch Federkraft in eine Eingriffsposition gebracht wird, in der ein Rastelement des Sicherungselements mit einer Rastvertiefung des Steckfußes zusammenwirkt. Zum Wechsel wird das Sicherungselement durch eine externe Kraftbeaufschlagung z.B. linear in eine Freigabestellung relativ zum Steckfuß verlagert, ehe der Steckfuß herausgezogen und der Steckfuß eines neuen Garniturteils eingeführt wird. Das Sicherungselement kehrt unter Federkraft in die Eingriffstellung zurück und legt den Steckfuß und damit den Garniturteil an der Sollposition festlegt. Dieses Schnellwechselsystem ermöglicht kurze Wechselzeiten, birgt jedoch die Gefahr, dass der Bediener oder ein Wechselautomat keinen Einfluss darauf hat bzw. keine Rückmeldung erhält, dass entweder das Maschinenelement ordnungsgemäß bis in die Sollposition gebracht und in dieser festgelegt ist, und/oder das Sicherungselement unter Federkraft ordnungsgemäß die Verriegelungsposition eingenommen hat. Ist das Maschinenelement nicht bis in die Sollposition gebracht und/oder das Sicherungselement nicht ordnungsgemäß in die Verriegelungsposition gestellt, dann wird das Maschinenelement zwar zunächst in einer zufälligen Position durch Reibschluss vom Sicherungselement gehalten. Jedoch kann sich das Maschinenelement im Betriebsablauf der Maschine beispielsweise durch betriebsbedingte Erschütterungen unkontrolliert aus der reibschlüssig gehaltenen Position im Halter lösen und entweder Schäden hervorrufen, oder eine ordnungsgemäße Produktbehandlung verwehren. In einem Heizmodul einer Behälter-Blasformmaschine kann ein sich lösender Garniturteil beispielsweise Heizeinrichtungen beschädigen oder eine unrichtige Beheizung eines Preformprodukts bewirken, aus welchem dann ein fehlerhafter Behälter blasgeformt wird. Der Garniturteil kann sogar herausfallen. Ähnliches gilt für Formschalen oder Bodenformen von Blasformen mit einem ähnlichen Schnellwechselsystem.

Aus EP1193178 A1 ist ein Füller bekannt, in welchem eine Schiebestange zum Heben und Senken des zu füllenden Behälters vertikal verschiebbar angeordnet ist. Die Schiebestange weist mehrere entsprechend unterschiedlichen Behälterhöhen beabstandete Querbohrungen für den jeweiligen Eingriff einer Kolbenstange eines stationären Pneumatikzylinders auf, sowie ein Paar auf gleicher Höhe liegender Kerben zum formschlüssigen Angriff von Klauen einer pneumatischen stationären Spannzange. Mit der Schiebestange ist über eine lösbare Kupplung eine parallel über einen Antrieb auf und ab verschiebbare Stange verbunden, die eine Behältertragplatte abstützt. Die Kupplung umfasst eine auf der Schiebestange verschiebbare, mit der Stange und einem Zahnriemenantrieb verbundene Kupplungshülse mit einer Querbohrung für die in eine jeweilige Querbohrung der Schiebestange eingeführte Kolbenstange. Bei einem Wechsel der Behälterhöhe werden zunächst die abgesenkte Schiebestange von der Spannzange festgehalten. Dann die Kupplung gelöst und die Kupplungshülse vom Zahnriemenantrieb auf eine andere, zur neuen Behälterhöhe passende Querbohrung ausgerichtet und die Kupplung erneut eingerückt. Erst nachfolgend wird die Spannzange geöffnet. Bei diesem Wechselverfahren wird das Maschinenelement, d.h. die Schiebestange zu keiner Zeit sich selbst überlassen, so dass sie keine unkontrollierbare Zwischenposition einnehmen kann, sondern ist jede nach einem Wechsel formschlüssig definierte Position der Schiebestange eine Sollposition.

In einer aus WO 2009/103435 A bekannten Packmittel-Behandlungsmaschine werden formatabhängige Funktionselemente bei einem Formatwechsel ausgetauscht und an mit Identifikationen versehenen Positionen entlang des Behandlungsweges positioniert. Nur in der Umrüstphase der Maschine wird dann ein Soll- und Ist-Positionsvergleich der gewechselten Funktionselemente über eine Rechner ausgeführt und werden zumindest festgestellte Abweichungen angezeigt und beispielsweise durch einen Bediener korrigiert. Tritt nach Beginn des Betriebsablaufs jedoch eine Abweichung zwischen der Sollposition und der Istposition auf, wird dies nicht mehr detektiert und können Schäden entstehen.

Ähnlich wird in einer aus der DE 198 03 820 A bekannten Behälterfaltmaschine jedes vom Zuschnitt abhängige Maschinenelement bei einem Zuschnittwechsel gewechselt und manuell in die Sollposition gebracht. Die Ist-Position wird beim Wechsel mit Messeinrichtungen gemessen. Die Sollposition ist gespeichert, so dass ein rechnergestützter Vergleich ausgeführt werden kann, um in der Umstellphase der Maschine korrekte Positionierungen sicherzustellen bzw. Hinweise zur Positionskorrektur abzuleiten. Wenn jedoch später im Betriebsablauf Abweichungen zwischen der Sollposition und der Istposition auftreten, lassen sich Schäden nicht mehr zuverlässig ausschließen.

Der Erfindung liegt die Aufgabe zugrunde, ein Schnellwechselsystem der eingangs genannten Art dahingehend zu verbessern, dass die Gefahr von Schäden durch nach einem Wechsel fehlerhaft positionierten Maschinenelementen auch im Betriebsablauf der Maschine minimiert ist, und ein Betriebsverfahren einer Behälter-Behandlungsmaschine anzugeben, das trotz systembedingter Nachteile des Schnellwechselsystems hohe Betriebssicherheit gewährleistet.

Die gestellte Aufgabe wird mit den Merkmalen des Patentanspruchs 1, und verfahrengemäß mit den Merkmalen des Patentanspruchs 12 gelöst.

Die zweite Sicherung gewährleistet trotz des kurze Wechselzeiten ermöglichenden Schnellwechselsystems, dass sich ein, z. B. im Betriebsablauf, unkontrolliert lösendes Maschinenelement nicht unkontrolliert komplett vom Halter löst oder soweit verlagert, dass es im Betriebsablauf Schäden hervorruft. Die zweite Sicherung ist so ausgeführt und platziert, dass ein sich zunächst unkontrolliert lösendes Maschinenelement gleich wieder kontrolliert in der Sicherungsposition festgelegt wird, und sich nicht mehr weiter lösen kann. In der Sicherungsposition bleibt es so positioniert, dass es zu keinen oder keinen nennenswerten Schäden in der Maschine kommen kann. Zunächst ist durch die zweite Sicherung sichergestellt, dass ein sich lösendes Maschinenelement die Betriebssicherheit zumindest anfänglich nicht vermindert. Hierbei sind die Sollposition und die Sicherungsposition jeweils mechanisch verriegelte Positionen des Maschinenelements im Halter in der Sollposition durch einen formschlüssigen Eingriff zwischen dem Maschinenelement und dem Sicherungselement und in der Sicherungsposition durch einen formschlüssigen Eingriff zwischen dem Maschinenelement und entweder demselben oder einem weiteren Sicherungselement. Speziell die Sicherungsposition verhindert, dass sich das Maschinenelement etwa unter betriebsbedingten Vibrationen oder im Betriebsablauf darauf ausgeübten Kräften über die Sicherungsposition hinaus unkontrolliert bis in eine gefährliche Position bewegen oder vollständig vom Halter lösen kann. Es könnte im Falle eines zweiten federbelasteten Sicherungselementes für die Sicherungsposition die Sicherungsposition selbst dann zur Schadensabkehr fixiert werden, wenn die Feder des ersten Sicherungselementes gebrochen oder dessen Funktion gestört sein sollte.

Verfahrensgemäß wird die zweite Sicherung eingesetzt, um eine definierte Detektion eines gelösten Maschinenelements zu ermöglichen, und bei Detektion der Sicherungsposition diese zum Initiieren oder Anfordern einer Korrekturmaßnahme auszuwerten. Die zweite Sicherung und die von dieser für das Maschinenelement eingestellte Sicherungsposition kann nämlich für den Betriebsablauf eine Gefahr darstellen, da nur in der Sollposition eine ordnungsgemäße Produktbehandlung zuverlässig gewährleistet wird, und bei länger dauerndem Betriebsablauf dennoch Schäden hervorrufen würde. Hier können jedoch Gegenmaßnahmen eingeleitet werden. Die Detektion ist einfach und mit einfachen Detektionsmitteln durchführbar, da nur auf die definierte Sicherungsposition geachtet zu werden braucht, und nicht jegliche unkontrollierte Positionsänderung des Maschinenelementes abzutasten ist. Es wird sozusagen kombinatorisch aus Sicherheitsgründen die zweite Sicherung im Schnellwechselsystem vorgesehen, um das Maschinenelement im Falle einer Fehlfunktion am vollständigen Lösen vom Halter oder am zu weiten Austreten aus dem Halter zu hindern, und wird diese zweite Sicherung als Voraussetzung für eine verfahrensmäßig einfache und zuverlässige Detektion und gegebenenfalls Beseitigung eines die Betriebsgefahr erhöhenden Fehlers verwendet. Dies ist besonders zweckmäßig im Heizmodul einer Behälter-Blasformmaschine, beispielsweise für Garniturteile an einer Förderkette zum Transport der Preforms durch das Heizmodul, weil sich vollständig lösende oder zu weit vorstehende Garniturteile Heizeinrichtungen nachhaltig beschädigen könnten, und vor allem die ordnungsgemäße Behandlung der Preforms im Heizmodul nicht mehr gewährleistet wäre, sondern zu teurem Ausschuss führen könnte. Dieses Betriebsverfahren ist aber auch beispielsweise für Formschalen oder Formböden von Blasformen in der Blasformmaschine zweckmäßig, die mit einem Schnellwechselsystem in kurzen Wechselzeiten wechselbar sind. Bei einer weiteren zweckmäßigen Ausführungsform ist das jeweilige Sicherungselement im Halter beweglich angeordnet, durch Federkraft in eine Verriegelungsposition an dem Maschinenelement, und durch eine externe Kraftbeaufschlagung rasch aus der Verriegelungsposition in eine Freigabeposition bringbar. Die externe Kraftbeaufschlagung kann durch einen Bediener, beispielsweise mit der Hand, oder durch einen Wechsler oder Wechselautomaten maschinell aufgebracht werden. Die Verriegelungsposition wird hingegen durch die Federkraft eingestellt, nachdem die externe Kraftbeaufschlagung aufgehört hat.

Bei einer besonders zweckmäßigen Ausführungsform des Schnellwechselsystems ist die Sicherungsposition des Maschinenelements im Halter durch eine Überwachungseinrichtung detektierbar und, falls nach einem Wechsel detektiert, als Anlass für eine Korrekturmaßnahme vor Betriebsaufnahme oder im Betriebsablauf der Maschine auswertbar. Die Detektion der Sicherungsposition kann z. B. über mindestens einen Umlauf oder mehrere Umläufe der Maschine vorgenommen werden, um das erst sich allmählich einstellende Lösen des Maschinenelements zuverlässig festzustellen und Nachfolgeschäden auch für das behandelnde Produkt auszuschließen oder zu minimieren.

Bei einer zweckmäßigen Ausführungsform wird das Schnellwechselsystem für ein Maschinenelement verwendet, das eine Formschale oder Bodenform einer Preform-Blasform oder ein Garniturteil, wie eine Abschirmplatte oder ein Heizdorn einer Preform-Förderkette in einem Heizmodul, jeweils in einer Behälter-Blasformmaschine, ist.

In einer konkreteren Ausführungsform ist der Garniturteil am Halter der Preform-Förderkette in der Sollposition und der Sicherungsposition mit wenigstens einem Steckfuß in einer die Wechselrichtung definierenden Bohrung des Halters festgelegt. Das jeweilige Sicherungselement kreuzt im Halter die Bohrung und wird durch wenigstens eine Feder in Eingriffsrichtung zum Eingriff mit dem Steckfuß beaufschlagt. Dabei ist die Sicherungsposition mit einem vorbestimmten, eine Gefährdung ausschließenden Abstand in Wechselrichtung von der Sollposition angeordnet, und zwar an der Seite der Sollposition, von der sich der Steckfuß beim Wechsel zur Sollposition bewegt. Sollte der Steckfuß nicht ordnungsgemäß bis zur Sollposition gebracht worden sein, oder sollte das Sicherungselement nicht ordnungsgemäß eingerastet sein und die Sollposition fixieren, wird der sich zunächst unkontrolliert lösende Steckfuß gleich in der vorbestimmten Sicherungsposition abgefangen und fixiert, einerseits, um eine Gefährdung zu minimieren oder auszuschließen, andererseits um die Sicherungsposition eindeutig und einfach detektieren zu können.

Dabei können das Sicherungselement ein Rastelement und der Steckfuß zumindest zwei axial beabstandete, die Sollposition und die Sicherungsposition definierende Rastvertiefungen zum Eingriff jeweils des Rastelements aufweisen.

Diese Struktur kann auch umgekehrt verwirklicht werden, in dem das Sicherungselement eine Rastvertiefung und der Steckfuß zumindest zwei axial beabstandete, die Sollposition und die Sicherungsposition definierende Rastelemente zum Eingriff jeweils in die Rastvertiefung aufweisen.

Baulich einfach und funktionssicher ist eine erste Rastvertiefung des Steckfußes, die eine axial breitere Kerbe oder eine erste Umfangsnut ist, und ist die zweite Rastvertiefung eine axial schmalere Kerbe oder eine zweite Umfangsnut im Steckfuß. Das Rastelement ist wenigstens eine in einer den Steckfuß mit Spiel umgreifenden Ausnehmung des Sicherungselement einwärts vorstehenden Nase, deren Breite beispielsweise der axialen Weite der zweiten Rastvertiefung entspricht. Die zweite Rastvertiefung kann im übrigen eine geringere Tiefe haben, als die erste Rastvertiefung.

Die Überwachungseinrichtung zum Detektieren der Sicherungsposition kann wenigstens einen separiert vom Halter stationär positionierten Detektor aufweisen. Dank der stationären Positionierung des Detektors ist eine einfache Leistungsversorgung oder Signalübertragung gewährleistet, während sich der Halter mit dem Maschinenelement im Betriebsablauf am Detektor vorbei bewegt. Der Detektor kann, vorzugsweise, einen Überstand des Maschinenelements in der Sicherungsposition oder eines markanten Teils des Maschinenelements über den Halter oder relativ zu gefährdeten anderen Komponenten in der Maschine detektieren.

Zweckmäßig ist hierfür wenigstens ein optoelektrischer, induktiver oder magnetischer oder mechanischer Detektor vorgesehen, und mit einer Maschinensteuerung verbunden.

Zweckmäßig wird, vorzugsweise in einem gut zugänglichen Servicebereich der Maschine, z.B. an der Preform-Förderkette, ein fernbetätigter, beispielsweise pneumatischer, Korrekturantrieb zum Nachjustieren des Maschinenelements aus der Sicherungsposition zurück in die Sollposition vorgesehen. Nach Detektion der Sicherungsposition wird das Maschinenelement beispielsweise in einer programmierten Routine in den Servicebereich gestellt und nachjustiert, ehe der Betriebsablauf aufgenommen oder weitergeführt wird. Der Korrekturantrieb könnte auch ein Wechselautomat sein, der an sich zum Wechsel vieler Maschinenelemente vorgesehen ist.

Verfahrensgemäß kann es bei vielen wechselbaren Maschinenelementen in der Maschine zweckmäßig sein, wenn bei Detektieren einer Sicherungsposition die Adresse des betroffenen Maschinenelements innerhalb der Maschine identifiziert und, vorzugsweise, angezeigt wird. Dann kann ein Bediener eingreifen, oder kann der Fehler automatisch einfacher behoben werden.

Ferner ist es zweckmäßig, wenn als Korrekturmaßnahme das Maschinenelement aus der Sicherungsposition wieder in die Sollposition nachjustiert oder neuerlich ordnungsgemäß gewechselt wird, und/oder ihm kein Produkt zugeordnet oder ein ihm bereits zugeordnetes Produkt ausgesondert wird. Dies ist speziell bei einem Preformprodukt zweckmäßig, das in der Sicherungsposition des Maschinenelements bzw. Garniturteils nicht mehr ordnungsgemäß behandelt würde. Alternativ oder additiv kann die Maschine auch komplett stillgesetzt werden.

Zweckmäßig wird zum Durchführen der Korrekturmaßnahme das in der Sicherungsposition detektierte Maschinenelement zur Nachjustierung oder zum neuerlichen Wechsel zuvor in einen vorbestimmten, gut zugänglichen Servicebereich der Maschine transportiert. Dort wird dann manuell oder automatisch die Korrekturmaßnahme eingeleitet und durchgeführt.

Ausführungsformen der Erfindung werden anhand der Zeichnung erläutert. Es zeigen:
- Fig. 1: eine Schemadarstellung einer mit Haltern und Schnellwechselsystemen für Maschinenelemente ausgestatteten Maschine, wobei als nicht beschränkendes Beispiel einer für das erfindungsgemäße Konzept gestalteten Maschine eine Behälterblasformmaschine illustriert ist,
- Fig. 2: eine Seitenansicht eines mit einem positionierten Maschinenelement bestückten Halters,
- Fig. 3: eine Perspektivansicht eines Halters mit daran positioniertem Maschinenelement, wobei als nicht beschränkendes Beispiel eines Maschinenelements ein Garniturteil, wie eine Abschirmplatte an einer Preform-Förderkette gezeigt ist,
- Fig. 4: eine Schnittdarstellung des Halters und eines Teils des darin in einer Sollposition festgelegten Maschinenelements, und
- Fig. 5: eine Schnittansicht entsprechend Fig. 4 mit dem in einer von der Sollposition von Fig. 4 abweichenden Sicherungsposition positionierten Maschinenelement.

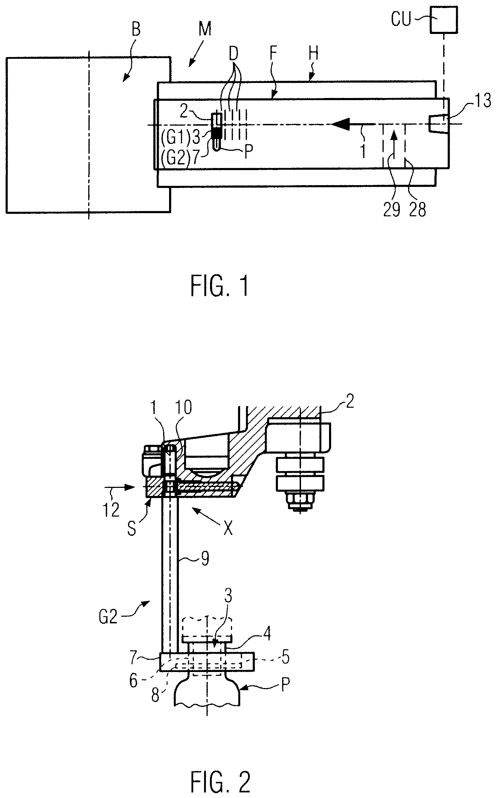

Fig. 1 verdeutlicht als nicht beschränkendes Beispiel schematisch eine Blasformmaschine M für Behälter, beispielsweise eine Streckblasmaschine für Kunststoffflaschen. Eine Blasstation B mit einem nicht gezeigte Blasformen tragenden Stern mit beispielsweise mittels nicht gezeigter Schnellwechselsysteme positionierten Formschalen und/oder Bodenformen ist an eine Förderstrecke F angeschlossen, die zumindest bereichsweise durch einen Heizmodul H für durch Bestrahlen oder auf sonstige Weise von außen her mittels Heizeinrichtungen aufzuheizende und/oder thermisch zu behandelnde Preforms P verläuft. Die Förderichtung der Förderstrecke F ist durch einen Pfeil 1 angedeutet. Die Förderstrecke F enthält eine Vielzahl eng nebeneinander platzierter Dornvorrichtungen D an einer Förderkette, jeweils mit einem hier hängend montierten Halter 2 und zumindest einem daran wechselbar positionierten Garniturteil G1 (z. B. Preform-Heizdorn 3) und eines wechselbar positionierten Garniturteils G2 (beispielsweise einer Abschirmplatte 7). Im Heizmodul H oder in einem beispielsweise außerhalb des Heizmoduls liegenden Abschnitt der Förderstrecke F (nicht gezeigt), ist ein gut zugänglicher Servicebereich 28 vorgesehen, in welchem beispielsweise ein Bediener in Richtung des Pfeiles 29 eingreifen kann, um eine fehlerhafte Positionierung des Garniturteils G2 zu korrigieren, oder ist im Servicebereich 28 ein Korrekturmechanismus 29, z.B. ein Pneumatikmechanismus (gegebenenfalls ein Wechselautomat), platziert, der die Nachjustierung oder einen neuerlichen Wechsel eines fehlerhaft positionierten Garniturteils G2 automatisch und/oder Bedienergeführt durchführt.

Eine Mündung 4 (Fig. 2) des Preforms P ist auf den Heizdorn 3 aufgesteckt. Die Heizdorne 3 werden im Betriebsablauf der Maschine M gegebenenfalls um Ihre Achsen rotiert, und thermisch behandelt, wobei die Mündung durch die Abschirmplatte 7 geschützt ist.

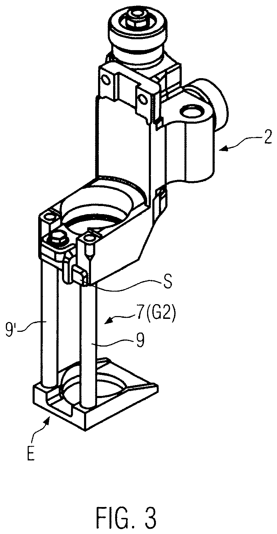

Die Mündung 4 des Preforms P weist (Fig. 2) beispielsweise einen außenliegenden Tragring 5 und ein Außengewinde 6 auf. Speziell dieser Mündungsbereich muss bei der thermischen Behandlung des Preforms P abgeschirmt werden, weil er bereits die spätere Gestalt, wie im blasgeformten Behälter hat, und durch eine zu intensive thermische Behandlung Schaden erleiden könnte. Hierfür dient der wechselbare Garniturteil G2 in Form der Abschirmplatte 7, die mit einem oder, wie gezeigt, mit zwei Steckfüßen 9, 9' (Fig. 3) als wechselbares Maschinenelement E im Halter 2 positioniert ist. Die Abschirmplatte 7 schirmt den sensiblen Mündungsbereich des Preforms P in einer Innenbohrung 8 ab.

Gemäß Fig. 2 ist ein Steckfuß 9 mit einem Endabschnitt 11 in eine Bohrung 10 des Halters 2 eingesteckt und darin mittels des Schwellwechselsystems durch ein Sicherungselement S in einer Sollposition X positioniert. Der mittels des Sicherungselements S festgelegte Garniturteil G2 kann sich somit nicht mehr unkontrolliert vom Halter 2 lösen, vorausgesetzt, er ist der in Fig. 2 angedeuteten Sollposition X positioniert, in der die ordnungsgemäße Behandlung eines aufgesteckten Preforms P im Heizmodul H sichergestellt ist. Um den Garniturteil G2 vom Halter 2 wechseln zu können, ist eine externe Kraftbeaufschlagung (Pfeil 12) auf das Sicherungselement S aufzubringen, um dieses aus der gezeigten Eingriffsposition gegen Federkraft in eine nicht gezeigte Freigabeposition zu verlagern. Dann lässt sich der Garniturteil G2 aus der Bohrung 10 herausziehen und durch einen anderen Garniturteil G2 ersetzen, der beispielsweise für eine andere Preformgröße oder dergleichen benötigt wird, und dessen Steckfuß 9 in die Bohrung 10 eingebracht und dann selbsttätig vom Sicherungselement S in der Sollposition X gesichert wird, vorausgesetzt der Steckfuß 9 wurde weit genug eingeschoben und das Sicherungselement S wurde durch die Federkraft in ordnungsgemäßen Eingriff gebracht. Der gewechselte Garniturteil G2 unterscheidet sich beispielsweise durch eine andere Größe und/oder Gestaltung der Abschirmplatte 7 und deren Innenbohrung 8 vom vorhergehend verwendeten Garniturteil G2, während sein Endabschnitt 11 zur Bohrung 10 und zum Sicherungselement S passt.

Fig. 3 zeigt den am Halter 2 angebrachten Garniturteil G2 in Form der Abschirmplatte 7 als mit Betätigung des Sicherungselements S wechselbares Maschinenelement beispielsweise der Maschine von Fig. 1.

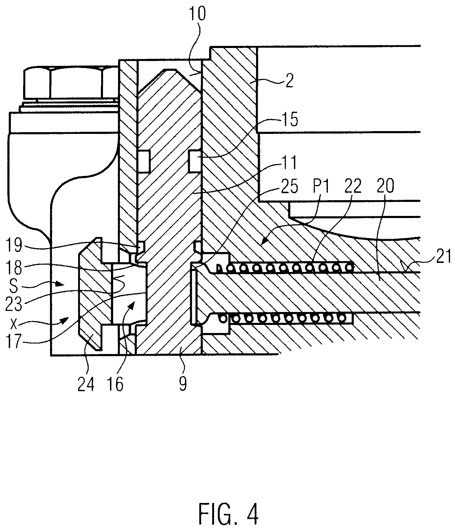

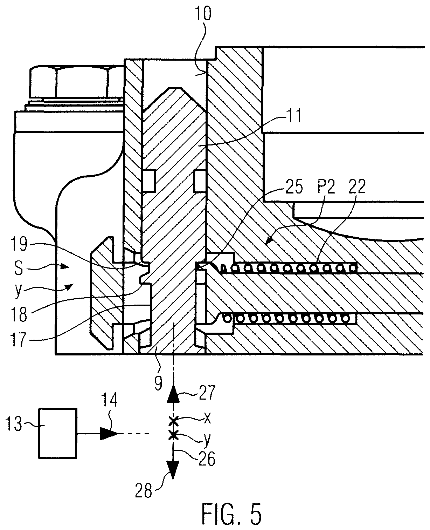

Die Schnittdarstellungen in den Fig. 4 und 5 zeigen eine mögliche Ausführungsform des Schnellwechselsystems, bestehend aus dem Steckfuß 9 mit dem entsprechend geformten Endabschnitt 11 und dem Sicherungselement S für beispielsweise die Abschirmplatte 7 als das Maschinenelement E, und zwar in Fig. 4 in der Sollposition X und in der Fig. 5 in einer von der Sollposition X abweisenden Sicherungsposition Y.

Der Endabschnitt 11 des Steckfußes ist zapfenartig ausgebildet und enthält eine Umfangsnut 15, in der beispielsweise ein nicht gezeigter O-Ring oder eine Gleitringdichtung platziert sein kann. Zum Positionieren des Steckfußes 9 im Halter 2, bzw. in dessen Bohrung 10, ist ein formschlüssiges Verrastsystem 16 vorgesehen, das in der gezeigten Ausführungsform aus einer ersten Rastvertiefung 17 in Form einer axial weiteren Kerbe oder einer Umfangsnut, und einer davon mit einem vorbestimmten axialen Abstand beabstandeten zweiten Rastvertiefung 19 in Form eine Kerbe oder einer Umfangsnut, jeweils im Endabschnitt 11, sowie einem Rastelement 25 am durch Federkraft in Eingriffsrichtung beaufschlagten Sicherungselement S besteht.

Eine Schulter 18 der ersten Rastvertiefung 17 dient im formschlüssigen Eingriff des Rastelementes 21 zur Definition der in Fig. 4 gezeigten Sollposition X. Die zweite Rastvertiefung 19 ist in der gezeigten Ausführungsform einen kurzen Abstand oberhalb der Schulter 18 vorgesehen und, beispielsweise, etwas seichter als die erste Rastvertiefung 17. Die zweite Rastvertiefung 19 ist im vorliegenden Fall an der Seite der Rastvertiefung 17 und in der Einsteckrichtung des Endabschnittes 11 beim Wechsel hinter der ersten Rastvertiefung 17 angeordnet. Die zweite Rastvertiefung 19 definiert die Sicherungsposition Y gemäß Fig. 5. Der Abstand der zweiten Rastvertiefung 19 von der Schulter 18 ist so gewählt, dass der in der Sicherungsposition Y nur etwas weiter aus dem Halter 2 vorstehende Garniturteil G2 beispielsweise im Heizmodul keine Schäden anrichten kann, d.h., mit keinen Heizeinrichtungen oder sonstigen Komponenten im Heizmodul kollidieren kann.

Sicherheitshalber könnten noch weitere zweite Rastvertiefungen 19 oberhalb der ersten Rastvertiefung 17 vorgesehen sein, um gegebenenfalls sogar mehr als eine Sicherungsposition Y zu definieren. Bevorzugt sind die Sollposition X und die Sicherungsposition Y mit dem gleichen Sicherungselement S zu fixieren. Dies ist aber nicht unbedingt notwendig. Die Sicherungsposition Y könnte auch von einem zweiten, ebenfalls federbelasteten Sicherungselement betätigt werden. Vorteil dabei wäre z.B., dass wenn eine das erste Sicherungselement 5 beaufschlagende Feder gebrochen oder dessen Funktion aus anderem Grund gestört sein sollte, dann das zweite Sicherungselement dennoch zum Eingriff käme und die Sicherungsposition Y sicherstellte.

Das Rastelement 25 ist in der gezeigten Ausführungsform in den Fig. 4 und 5 eine in einer den Endabschnitt 11 zumindest mit Spiel in der Zeichnungsebene umfassenden, z.B. kreisrunden, Aufnahme 23 des stiftförmigen Sicherungselements S vorstehende Nase. Die Tiefe der ersten Rastvertiefung 17 ist beispielsweise im Verhältnis zum Überstand des Rastelementes 25 in der Aufnahme 23 so gewählt, dass der untere Rand der Aufnahme 23 ein zu weites Einschieben des Endabschnittes 11 des Steckfußes 9 in die Bohrung 10 blockiert, sobald das Rastelement 25 fast in die in Fig. 4 gezeigte Eingriffsposition hinter die Schulter 18 gekommen ist.

Das Sicherungselement S weist einen von außen zugänglichen, beispielsweise verdickten Kopf 24 auf, auf den die externe Kraftbeaufschlagung 12 (Fig. 2) aufgebracht werden kann, und wird mit einem Schaft 20 in einer Bohrung 21 im Halter verschiebbar geführt. Die Bohrung 21 kreuzt die Bohrung 10, beispielsweise in etwa senkrecht. Das Sicherungselement S wird im Halter 2 durch eine Feder 22 in Richtung zu der in Fig. 4 gezeigten Eingriffsstellung beaufschlagt. Die Feder 22 wird bei Überführen des Sicherungselements in die nicht gezeigte Freigabestellung überwunden, bis beispielsweise die Rückseite des Rastelements 25 in der Bohrung 21 abgefangen wird, so dass die Mitte der Aufnahme 23 in etwa mit der Längsachse des Endabschnittes 11 fluchtet, und der Steckfuß 9 herausgezogen werden kann. In der in Fig. 4 gezeigten Ausführungsform ist die radiale Tiefe der zweiten Rastvertiefung 19 etwas geringer als die radiale Tiefe der ersten Rastvertiefung 17.

Sollte bei einem Wechsel der Steckfuß 9 nicht bis in die in Fig. 4 gezeigte Sollposition X eingeführt worden sein, und/oder sollte die Feder 22 das Rastelement 25 nicht in den in Fig. 4 gezeigten ordnungsgemäßen Eingriff hinter die Schulter 18 verstellt haben, wäre der Steckfuß 9 zunächst zwar reibschlüssig gesichert, wobei ein den Wechsel vornehmender Bediener oder ein Wechselautomat keine Rückmeldung darüber erhielte, dass die in Fig. 4 gezeigte Sollposition X fixiert ist.

Im Betriebsablauf der Maschine, beispielsweise unter betriebsbedingten Erschütterungen und/oder durch das Eigengewicht des Maschinenelements E, könnte sich dann der Endabschnitt 11 allmählich lösen und in der Bohrung 10 nach unten wandern und schließlich aus der Bohrung 10 herausfallen, was zu einem Schaden führen könnte. Dank der zweiten Rastvertiefung 19 kommt jedoch dann das Rastelement 25 in die zweite Rastvertiefung 19 zum formschlüssigen Eingriff, bewirkt durch die Feder 22, und wie in Fig. 5 gezeigt, so dass dann der Endabschnitt 11 und damit das Maschinenelement E in der exakt vorbestimmten Sicherungsposition Y fixiert ist. Dabei könnte das Sicherungselement S unter der Kraftwirkung der Feder 22 mit der unterhalb des Rastelements 25 liegenden Fläche am Steckfuß 9 im Bereich des Übergangs von der Schulter 18 in die zweite Rastvertiefung 19 anstehen.

Gemäß Fig. 5 ist die Überwachungseinrichtung 13 mit wenigstens einem Detektor 14 ausgestattet, der die Sicherungsposition Y abtastet, z.B. die Unterseite der Abschirmplatte 7 oder einem anderen markanten Teil des Maschinenelements E, nachdem sich der Endabschnitt 11 in Richtung eines Pfeils 18 nach unten bewegt hat und die Sicherungsposition Y fixiert ist. Beim Wechsel wird der Steckfuß 9 im übrigen in Richtung eines Pfeils 27 in Fig. 5 eingeschoben. Aufgrund der relativen Dimensionierungen der ersten und zweiten Rastvertiefungen 17 und 19, des Überstandes des Rastelements 25 über die darunterliegende Fläche ist, wie in den Fig. 4 und 5 angedeutet, der Kopf 24 des Sicherungselements S in der ordnungsgemäßen Sollposition X in Fig. 4 weiter aus dem Halter 2 ausgetreten, als in der Sicherungsposition Y in Fig. 5, so dass die Überwachungseinrichtung 13 die Sicherungsposition Y auch beispielsweise durch Abtasten der Position des Kopfes 24 von außen her detektieren könnte.

Eine umgekehrte Struktur der Verrastung 16 ist ebenfalls möglich. In diesem Fall wäre beispielsweise das Rastelement 25 vorstehend am Außenumfang des Endabschnitts 11 angeformt, während im Sicherungselement S in der Aufnahme 23 zwei axial beabstandete Rastvertiefungen, analog zu den ersten und zweiten Rastvertiefungen 17 und 19 in den Fig. 4 und 5, geformt sind. Die Funktion wäre gleich.

Da das in der Sicherungsposition Y festgelegte Maschinenelement E, beispielsweise der Garniturteil G2, keine ordnungsgemäße Behandlung beispielsweise des Preforms P im Mündungsbereich 4 mehr gewährleistet, ist es zweckmäßig, nach Detektieren der Sicherungsposition Y Korrekturmaßnahmen anzuordnen oder einzuleiten. Beispielsweise könnte vor Betriebsaufnahme oder bei beginnendem Betriebsablauf (die Detektion erfolgt beispielsweise über mindestens einen Umlauf), die entlang der Förderstrecke F gegebene Adresse des fehlerhaften positionierten Maschinenelements E an eine Steuervorrichtung CU übermittelt werden, die den betroffenen Halter 2 in den Servicebereich 28 transportiert, wo mit gutem Zugang die ordnungsgemäße Positionierung hergestellt wird. Alternativ oder additiv könnte anhand der bekannte Adresse des betroffenen Halters 2 das Aufbringen eines Preforms P auf den Heizdorn 3 inhibiert werden, oder ein bereits aufgebrachter Preform P noch vor Erreichen der Blasstation B ausgesondert und ggf. recycelt werden, um einen Ausschussbehälter zu vermeiden, oder könnte auch die Maschine M stillgesetzt werden, um die Korrekturmaßnahme vorzunehmen. Als mechanischer oder elektromechanischer Detektor 14 könnte beispielsweise im Bewegungsweg der Abschirmplatte 7 ein Schalter dienen, der z. B. nur in der Sicherungsposition Y betätigt wird und ein Signal an die Steuereinheit CU liefert, sobald sich die Förderkette nach einem Wechsel weiterbewegt. Alternativ könnte ein optoelektronischer, induktiver, magnetischer oder anderer Detektor 14 vorgesehen sein.

Ein ähnliches Schnellwechselsystem, wie anhand der Fig. 1 bis 5 erläutert, könnte auch in der Blasstation B beispielsweise in den Blasformen für Formschalen oder Bodenformen eingesetzt werden, wobei die zweite Sicherung P2 mit der Sicherungsposition Y ebenfalls durch eine Überwachungseinrichtung 14 detektierbar ist. Das Konzept, ein Schnellwechselsystem mit einer zusätzlich zu einer ersten Sicherung P1 mit einer zweiten Sicherung P2 und einer eindeutig definierten Sicherungsposition Y auszulegen, kann allgemein in Maschinen eingesetzt werden, bei denen mit kurzen Wechselzeiten und Schnellwechselsystemen Maschinenelemente gewechselt werden, deren korrekte Positionierung für die Betriebssicherheit essentiell ist.

Das Konzept des Schnellwechselsystems mit der zweiten Sicherung P2 und der Sicherungsposition Y nur geringfügig beabstandet von der Sollposition X kann beispielsweise in der Maschine M gem. Fig. 1 auch angepasst für die Heizdorne 3 verwendet werden, beispielsweise bei Heizdornhaltern ähnlich denen gemäß DE 10 2007 037 400 A, oder bei anderen Heizdorn-Schnellwechselsystemen mit z. B. formschlüssiger Verrastung eines Heizdornschafts im Halter.

## Patentansprüche

1. Schnellwechselsystem für produktabhängig wechselbare Maschinenelemente (E) in einer einen Betriebsablauf ausführenden Maschine (M), insbesondere in einer Behälter-behandlungsmaschine, in welchem das Maschinenelement (E) manuell oder durch einen Wechsler in einer Wechselrichtung (26) in einen Halter (2) zu einer Sollposition (X) bringbar und durch eine wenigstens ein Sicherungselement (S) umfassende Sicherung (P1) in der Sollposition (X) festlegbar ist, wobei wenigstens eine zweite Sicherung P2) vorgesehen ist, **dadurch gekennzeichnet, dass** mit der zweiten Sicherung (P2) das entweder nicht in die Sollposition (X) gebrachte oder aus der Sollposition (X) verlagerte Maschinenelement (E) in einer von der Sollposition (X) abweichenden, definiert detektierbaren Sicherungsposition (Y) festlegbar ist, und dass die Sollposition (X) und die Sicherungsposition (Y) jeweils mechanisch verriegelte Positionen des Maschinenelements (E) im Halter (2) sind, und zwar in der Sollposition (X) durch einen formschlüssigen Eingriff zwischen dem Maschinenelement (E) und dem Sicherungselement (S) und in der Sicherungsposition (Y) durch einen formschlüssigen Eingriff zwischen dem Maschinenelement (E) und demselben oder einem weiteren Sicherungselement (S).

2. Schnellwechselsystem nach Anspruch 1, **dadurch gekennzeichnet, dass** das jeweilige Sicherungselement (S) im Halter (2) beweglich angeordnet, durch Federkraft (22) in eine Verriegelungsposition an dem Maschinenelement (E), und durch eine externe Kraftbeaufschlagung (12) aus der Verriegelungsposition in eine Freigabeposition bringbar ist.

3. Schnellwechselsystem nach Anspruch 1, **dadurch gekennzeichnet, dass** eine Überwachungseinrichtung (13, 14) zum Detektieren der Sicherungsposition (Y) des Maschinenelements (E) im Halter (2) vorgesehen und die nach einem Wechsel detektierte Sicherungsposition (Y) zum Initiieren oder Anfordern einer bzw. als Anlass für eine Korrekturmaßnahme vor Betriebsaufnahme oder im Betriebsablauf der Maschine (M) auswertbar ist.

4. Schnellwechselsystem nach wenigstens einem der vorhergehenden Ansprüche, **dadurch gekennzeichnet, dass** das Maschinenelement eine Formschale oder Bodenform einer Preform-Blasform in einer Blasstation (4) oder ein Garniturteil (G1, G2) wie eine Abschirmplatte (7) oder ein Heizdorn (3) einer Preform-Förderkette in einem Heizmodul (H), jeweils einer Behälter-Blasmaschine (M), ist.

5. Schnellwechselsystem nach Anspruch 4, **dadurch gekennzeichnet, dass** der Garniturteil (G1, G2) in der Sollposition (X) und der Sicherungsposition (Y) mit wenigstens einem Steckfuß (9) in einer die Wechselrichtung (26) definierenden Bohrung (10) des Halters (2) festgelegt ist, dass das jeweilige Sicherungselement (S) im Halter (2) die Bohrung (10) quer zur Wechselrichtung (26) kreuzt und in Eingriff mit dem Steckfuß (9) durch eine Feder (22) in Eingriffsrichtung beaufschlagt ist, und dass die Sicherungsposition (Y) mit einem vorbestimmten Abstand in Wechselrichtung (26) von der Sollposition (X) beabstandet und an der Seite der Sollposition (X) angeordnet ist, von der der Steckfuß (9) beim Wechsel zur Sollposition (X) bewegbar ist.

6. Schnellwechselsystem nach Anspruch 5, **dadurch gekennzeichnet, dass** das Sicherungselement (S) ein Rastelement (25) und der Steckfuß (9) zumindest zwei axial beabstandete, die Sollposition (X) und die Sicherungsposition (Y) in Relation zum Sicherungselement (S) definierende erste und zweite Rastvertiefungen (17, 19) zum Eingriff jeweils des Rastelements (25) in Eingriffsrichtung des Sicherungselements (S) aufweisen.

7. Schnellwechselsystem nach Anspruch 5, **dadurch gekennzeichnet, dass** das Sicherungselement (S) eine Rastvertiefung und der Steckfuß (9) zumindest zwei axial beabstandete, die Sollposition (X) und die Sicherungsposition (Y) in Relation zum Sicherungselement (S) definierende Rastelemente jeweils zum Eingriff in die Rastvertiefung aufweisen.

8. Schnellwechselsystem nach Anspruch 6, **dadurch gekennzeichnet, dass** die erste Rastvertiefung (17) eine axial breitere Kerbe, vorzugsweise eine erste Umfangsnut, und die zweite Rastvertiefung (19) eine axial schmalere Kerbe, vorzugsweise eine zweite Umfangsnut, vorzugsweise mit geringerer Tiefe als die erste Umfangsnut, im Steckfuß (9) sind, und dass das Rastelement (25) wenigstens eine in einer dem Steckfuß (9) mit Spiel umgreifenden Ausnehmung (23) des Sicherungselements (S) einwärts vorstehende Nase ist, vorzugsweise mit einer Breite entsprechend der axialen Weite der zweiten Rastvertiefung (19).

9. Schnellwechselsystem nach Anspruch 3, **dadurch gekennzeichnet, dass** die Überwachungseinrichtung (13) wenigstens einen separiert vom Halter (2) stationär positionierten Detektor (14) aufweist, der einen Überstand des oder eines markanten Teils des Maschinenelements (E) über den Halter (2) in der Sicherungsposition (Y) detektiert.

10. Schnellwechselsystem nach Anspruch 9, **gekennzeichnet durch** einen optoelektronischen, induktiven, magnetischen oder mechanischen Detektor (14).

11. Schnellwechselsystem nach wenigstens einem der vorhergehenden Ansprüche, **dadurch gekennzeichnet, dass**, vorzugweise in einem Servicebereich (28) der Maschine (M), ein fernbetätigter, z.B. pneumatischer, Korrekturantrieb (29) zum Nachjustieren des Maschinenelements (E) aus der Sicherungsposition (Y) in die Sollposition (X) vorgesehen ist.

12. Betriebsverfahren einer Behälter-Behandlungsmaschine (M), insbesondere einer Maschine zum Blasformen von Behältern aus Preformprodukten (P), wobei für den Betriebsablauf und vor Betriebsaufnahme bei einem produktabhängigen Wechsel wenigstens ein wechselbares Maschinenelement (E) mit einem Schnellwechselsystem in einer Sollposition (X) in einem Halter (2) festgelegt wird und das Schnellwechselsystem eine Sicherung (P1) mit wenigstens einem Sicherungselement (S) für das gewechselte Maschinenelement (E) sowie wenigstens eine zweite Sicherung (P2) aufweist, **dadurch gekennzeichnet, dass** mit der zweiten Sicherung (P2) das entweder nicht in die Sollposition (X) gebrachte oder aus der Sollposition (X) verlagerte Maschinenelement (E) in einer von der Sollposition (X) abweichenden, definiert detektierbaren Sicherungsposition (Y) festgelegt wird, dass die Sollposition (X) und die Sicherungsposition (Y) jeweils mechanisch verriegelte Positionen des Maschinenelementes (E) im Halter (2) sind, und zwar in der Sollposition (X) durch einen formschlüssigen Eingriff zwischen dem Maschinenelement (E) und dem Sicherungselement (S) und in der Sicherungsposition (Y) durch einen formschlüssigen Eingriff zwischen dem Maschinenelement (E) und demselben oder einem weiteren Sicherungselement (S), dass das in der Sicherungsposition (Y) festgelegte Maschinenelement (E) vor Betriebsaufnahme oder im Betriebsablauf detektiert wird, und dass die Detektion der Sicherungsposition (Y) als Anlass für eine Korrekturmaßnahme ausgewertet und eine Korrekturmaßnahme eingeleitet wird.

13. Betriebsverfahren nach Anspruch 12, **dadurch gekennzeichnet, dass** zumindest beim Detektieren der Sicherungsposition (Y) eine Adresse des betroffenen Maschinenelements (E) innerhalb der Maschine (M) identifiziert und, vorzugsweise, angezeigt wird.

14. Betriebsverfahren nach Anspruch 12, **dadurch gekennzeichnet, dass** als eingeleitete Korrekturmaßnahme das Maschinenelement (E) aus der Sicherungsposition (Y) in die Sollposition (X) nachjustiert oder neuerlich ordnungsgemäß gewechselt wird und/oder ihm kein Preformprodukt (P) zugeordnet oder ein ihm bereits zugeordnetes Preformprodukt (P) ausgesondert und/oder die Maschine (M) stillgesetzt wird.

15. Betriebsverfahren nach Anspruch 14, **dadurch gekennzeichnet, dass** das in der Sicherungsposition (Y) detektierte Maschinenelement (E) zum Nachjustieren oder neuerlichen Wechseln in einen vorbestimmten Servicebereich (28) der Maschine transportiert, und dort vorzugsweise, manuell oder automatisch, nachjustiert oder neuerlich gewechselt wird.

## Claims

1. Quick-change system for exchangeable machine elements (E) that depend on the product in a machine (M) carrying out an operating sequence, particularly in a container processing machine in which system the machine element (E) can be brought manually or by a changer in an exchange direction (26) into a target position (26) into a holder (2) and can be fiixed in the target position (X) by a securing unit (P1) comprising at least one securing element (S), wherein at least one second securing unit (P2) is provided, **characterised in that,** by the second securing unit (P2), the machine element (E) that either has not been brought into the target position (X) or that has moved out of the target position (X) can be fixed in a defined detectable securing position (Y) that differs from the target position (X), and that the target position (X) and the securing position (Y) each are mechanically locked positions of the machine element (E) in the holder (2), namely in the target position (X) by a form-fit engagement of the machine element (E) and the securing element (S) and in the securing position (Y) by a form-fit engagement of the machine element (E) and the same or an additional securing element (S).

2. Quick-change system according to Claim 1, **characterised in that** the respective securing element (S) is movably arranged in the holder (2), can be brought by spring force (22) into a locking position on the machine element (E), and can be brought from the locking position into a release position by means of an external application of force (12).

3. Quick-change system according to claim 1, **characterised in that** a monitoring device (13, 14) for detecting the securing position (Y) of the machine element (E) in the holder (2) is provided, and that the securing position (Y) detected after an exchange of the machine element (E) can be evaluated as ground for a corrective action before beginning operation or in the operating sequence of the machine (M).

4. Quick-change system according to at least one of the preceding claims, **characterised in that** the machine element is a moulding shell or bottom mould of a preform blow mould in a blow-moulding station (4) or a fitting part (G1, G2) like a shielding plate (7) or a heating mandrel (3) of a preform conveyor chain in a heating module (H), in each case of a blow-moulding machine (M).

5. Quick-change system according to Claim 4, **characterised in that** the fitting part (G1, G2) is fixed in the target position (X) and in the securing position (Y) with at least one plug-in foot (9) in a bore hole (10) of the holder (2), wherein this bore hole defines the exchange direction (26), **in that** the respective securing element (S) crosses the bore hole (10) at right angles to the exchange direction (26) in the holder (2) and is acted upon in the engagement direction by a spring (22) when engaging with the plug-in foot (9), and **in that** the securing position (Y) is spaced from the target position (X) at a predetermined distance in the exchange direction (26) and is arranged on the side of the target position (X) from which the plug-in foot (9) can be moved to the target position (X) during the exchange.

6. Quick-change system according to Claim 5, **characterised in that** the securing element (S) has a latching element (25) and the plug-in foot (9) has at least two axially spaced first and second latching depressions (17, 19) that define for the respective element of the latching element (25) in the engagement direction of the securing element (S) the target position (X) and the securing position (Y) in relationship to the securing element (S).

7. Quick-change system according to Claim 5, **characterised in that** the securing element (S) has a latching depression (9) and the plug-in foot (9) has at least two axially spaced latching elements that define the target position (X) and the securing position (Y) in relation to the securing element (S), each for engaging with the latching depression.

8. Quick-change system according to Claim 6, **characterised in that** the first latching depression (17) in the plug-in foot (9) is an axially wider notch, preferably a first circumferential groove, and that the second latching depression (19) is an axially narrower notch in the plug-in foot (9), preferably a second circumferential groove, preferably with a smaller depth than the first circumferential groove, and that the latching element (25) is at least one nose that projects inwardly from a recess (23) of the securing element (S) that encompasses the plug-in foot (9) with clearance, the nose preferably having a width corresponding to the axial width of the second latching depression (19).

9. Quick-change system according to Claim 3, **characterised in that** the monitoring device (13) has at least one detector (14) positioned in a stationary manner separated from the holder (2), wherein this detector preferably detects a protrusion of the machine element (E) or a prominent part of the machine element (E) beyond the holder (2) in the securing position (X).

10. Quick-change system according to Claim 9, **characterised by** an opto-electronic, inductive, magnetic or mechanical detector (14).

11. Quick-change system according to at least one of the preceding claims, **characterised in that** a remote-controlled, e.g., pneumatic, corrective drive (29) is provided, preferably in a service area (28) of the machine (M), for readjusting the machine element (E) from the securing position (Y) into the target position(X).

12. Operating method of a container processing machine (M), particularly of a machine for blow moulding containers made of preform products (P), wherein for the operating sequence and before starting operation in the event of an exchange depending on the product at least one exchangeable machine element (E) is fixed in a holder (2) by a quick-change system in a target position (X), the quick-change system having a securing unit (P1) with at least one securing element (S) for the exchanged machine element (E) and at least one second securing unit (P2), **characterised in that** the machine element (E), which either has not been brought into the target position (X) or has been dislocated out of the target position (X), is fixed in the holder (2) by the second securing unit (P2) in a defined detectable securing position (Y) differing from the target position (X), that the target position (X) and the securing position (Y) are mechanically locked positions of the machine element (E) in the holder (2), namely in the target position (X) by form-fit engagement between the machine element (E) and the securing element (S) and in the securing position (Y) by form-fit engagement between the machine element (E) and the same or an additional securing element (S), that the machine element (E) fixed in the securing position (Y) is detected before operation starts or during the operating sequence, and **in that** the detection of the securing position (Y) is evaluated as ground for a corrective action and a corrective action is initiated.

13. Operating method according to Claim 12, **characterised in that** at least when the securing position (Y) is detected, the address of the machine element (E) in question within the machine (M) is identified and, preferable, indicated.

14. Operating method according to Claim 12, **characterised in that,** as an initiated corrective action, the machine element (E) is readjusted from the securing position (Y) into the target position (X) or is again properly exchanged and / or no preform product (P) is assigned to it or a preform product (P) already assigned to it is sorted out and / or the machine (M) is brought to a standstill.

15. Method according to Claim 14, **characterised in that** the machine element (E) detected in the securing position (Y) is transported to a predetermined service area (28) of the machine for readjustment or to be exchanged again and is readjusted or exchanged again, preferably either manually or automatically.

## Revendications

1. Système de changement rapide pour des éléments de machine (E) interchangeables en fonction du produit, dans une machine (M) exécutant une séquence de fonctionnement, notamment dans une machine de traitement de contenants, dans lequel l'élément de machine (E) peut être amené manuellement ou par un changeur, selon une direction de changement (26), dans un support (2) dans une position de consigne (X), et peut être fixé dans la position de consigne (X) par un arrêt de sureté (P1) comportant au moins un élément d'arrêt de sureté (S), au moins un deuxième arrêt de sureté (P2) étant prévu dans le système,
**caractérisé en ce qu'**au moyen du deuxième arrêt de sureté (P2), l'élément de machine (E), qui, soit n'a pas été amené dans la position de consigne (X), soit est décalé par rapport à la position de consigne (X), peut être fixé dans une position d'arrêt de sureté (Y) s'écartant de la position de consigne (X) et pouvant être détectée de manière définie, et **en ce que** la position de consigne (X) et la position d'arrêt de sureté (Y) sont respectivement des positions verrouillées mécaniquement de l'élément de machine (E) dans le support (2), ceci, dans la position de consigne (X), par une prise réciproque par complémentarité de formes entre l'élément de machine (E) et l'élément d'arrêt de sureté (S), et dans la position d'arrêt de sureté (Y), par une prise réciproque par complémentarité de formes entre l'élément de machine (E) et le même ou un autre élément d'arrêt de sureté (S).

2. Système de changement rapide selon la revendication 1, **caractérisé en ce que** l'élément d'arrêt de sureté (S) est agencé de manière mobile dans le support (2), et peut être amené par une force de ressort (22) dans une position de verrouillage sur l'élément de machine (E), et par une sollicitation externe moyennant une force (12), de la position de verrouillage à une position de libération.

3. Système de changement rapide selon la revendication 1, **caractérisé en ce qu'**il est prévu un dispositif de surveillance (13, 14) pour détecter la position d'arrêt de sureté (Y) de l'élément de machine (E) dans le support (2), et la position d'arrêt de sureté (Y) détectée après un changement peut être mise à profit pour initier ou requérir une mesure de correction ou en tant que motif pour une telle mesure de correction avant la mise en fonctionnement ou au cours de la séquence de fonctionnement de la.machine (M).

4. Système de changement rapide selon l'une au moins des revendications précédentes, **caractérisé en ce que** l'élément de machine est une coque de moulage ou un moule de fond d'un moule de soufflage de préforme dans un poste de moulage par soufflage (4), ou bien une pièce de garniture (G1, G2) telle une plaque d'écran de protection (7) ou un mandrin chauffant (3) d'une chaine de transport de préformes dans un module de chauffage (H), respectivement d'une machine de moulage par soufflage de contenants (M).

5. Système de changement rapide selon la revendication 4, **caractérisé en ce que** la pièce de garniture (G1, G2) est, dans la position de consigne (X) et la position d'arrêt de sureté (Y), fixée avec un pied enfichable (9) dans un alésage (10) du support (2), qui définit la direction de changement (26), **en ce que** l'élément d'arrêt de sureté (S) respectif intersecte l'alésage (10) dans le support (2), transversalement à la direction de changement (26), et, en prise avec le pied enfichable (9), est sollicité par un ressort (22) dans la direction de venue en prise, et **en ce que** la position d'arrêt de sureté (Y) est espacée d'une distance prédéterminée dans la direction de changement (26), de la position de consigne (X), et est située sur le côté de la position de consigne (X) à partir duquel le pied enfichable (9) est déplaçable vers la position de consigne (X) lors du changement.

6. Système de changement rapide selon la revendication 5, **caractérisé en ce que** l'élément d'arrêt de sureté (S) présente un élément d'encliquetage (25) et le pied enfichable (9) au moins deux premier et deuxième creux d'encliquetage (17, 19) espacés axialement, qui définissent la position de consigne (X) et la position d'arrêt de sureté (Y) en relation avec l'élément d'arrêt de sureté (S), et destinés à la venue en prise respective de l'élément d'encliquetage (25) dans la direction d'entrée en prise de l'élément d'arrêt de sureté (S).

7. Système de changement rapide selon la revendication 5, **caractérisé en ce que** l'élément d'arrêt de sureté (S) présente un creux d'encliquetage et le pied enfichable (9) au moins deux éléments d'encliquetage espacés axialement, qui définissent la position de consigne (X) et la position d'arrêt de sureté (Y) en relation avec l'élément d'arrêt de sureté (S), et destinés à venir en prise respectivement dans le creux d'encliquetage.

8. Système de changement rapide selon la revendication 6, **caractérisé en ce que** le premier creux d'encliquetage (17) est une entaille axialement plus large dans le pied enfichable (9), de préférence une première rainure périphérique, et le deuxième creux d'encliquetage (19) une entaille axialement plus étroite dans le pied enfichable, de préférence une deuxième rainure périphérique, qui de préférence est d'une profondeur moindre que celle de la première rainure périphérique, et **en ce que** l'élément d'encliquetage (25) est au moins un mentonnet qui fait saillie vers l'intérieur d'un évidement (23) de l'élément d'arrêt de sureté (S) entourant le pied enfichable (9) avec jeu, et présente de préférence une largeur correspondant à la largeur axiale du deuxième creux d'encliquetage (19).

9. Système de changement rapide selon la revendication 3, **caractérisé en ce que** le dispositif de surveillance (13) comporte au moins un détecteur (14) positionné de manière stationnaire séparément du support (2), et qui détecte un dépassement de l'élément de machine (E) ou d'une partie marquante de celui-ci au-delà du support (2), dans la position d'arrêt de sureté (Y).

10. Système de changement rapide selon la revendication 9, **caractérisé par** un détecteur (14) optoélectronique, inductif, magnétique ou mécanique.

11. Système de changement rapide selon l'une des revendications précédentes, **caractérisé en ce qu'**il est prévu, de préférence dans une zone d'intervention de service (28) de la machine (M), un entraînement de correction (29) actionné à distance, par exemple pneumatique, pour réajuster l'élément de machine (E) de la position d'arrêt de sureté (Y) à la position de consigne (X).

12. Procédé de fonctionnement d'une machine de traitement de contenants (M), notamment une machine pour assurer le moulage par soufflage de contenants à partir de produits de préformes (P), d'après lequel pour la séquence de fonctionnement et avant la mise en fonctionnement, lors d'un changement en fonction du produit, au moins un élément de machine (E) interchangeable est fixé à l'aide d'un système de changement rapide, dans une position de consigne (X), dans un support (2), et le système de changement rapide comporte un arrêt de sureté (P1) avec au moins un élément d'arrêt de sureté (S) pour l'élément de machine (E) ayant été changé, ainsi qu'au moins un deuxième arrêt de sureté (P2), **caractérisé en ce qu'**au moyen du deuxième arrêt de sureté (P2), l'élément de machine (E), qui, soit n'a pas été amené dans la position de consigne (X), soit est décalé par rapport à la position de consigne (X), est fixé dans une position d'arrêt de sureté (Y) s'écartant de la position de consigne (X) et pouvant être détectée de manière définie, **en ce que** la position de consigne (X) et la position d'arrêt de sureté (Y) sont respectivement des positions verrouillées mécaniquement de l'élément de machine (E) dans le support (2), ceci, dans la position de consigne (X), par une prise réciproque par complémentarité de formes entre l'élément de machine (E) et l'élément d'arrêt de sureté (S), et dans la position d'arrêt de sureté (Y), par une prise réciproque par complémentarité de formes entre l'élément de machine (E) et le même ou un autre élément d'arrêt de sureté (S), **en ce que** l'élément de machine (E) fixé dans la position d'arrêt de sureté (Y) est détecté avant la mise en fonctionnement ou lors de la séquence de fonctionnement, et **en ce que** la détection de la position d'arrêt de sureté (Y) constitue un motif pour une mesure de correction, et une mesure de correction est initiée en conséquence.

13. Procédé de fonctionnement selon la revendication 12, **caractérisé en ce qu'**au moins lors de la détection de la position d'arrêt de sureté (Y), une adresse de l'élément de machine (E) concerné est identifiée à l'intérieur de la machine (M), et est de préférence affichée.

14. Procédé de fonctionnement selon la revendication 12, **caractérisé en ce que** la mesure de correction initiée consiste à réajuster l'élément de machine (E) de la position d'arrêt de sureté (Y) à la position de consigne (X), ou à le changer nouvellement de manière correcte, et/ou à ne pas lui associer de produit de préforme (P) ou à extraire un produit de préforme (P) qui lui a déjà été associé, et/ou à arrêter la machine (M).

15. Procédé de fonctionnement selon la revendication 14, **caractérisé en ce que** l'élément de machine (E) détecté dans la position d'arrêt de sureté (Y) est, pour son réajustement ou pour son nouvel échange, transporté dans une zone d'intervention de service (28) prédéterminée de la machine, et y est, de préférence manuellement ou automatiquement, réajusté ou nouvellement échangé.
